# EUROPEAN PATENT SPECIFICATION

(11) **EP 0 454 721 B1**
(45) Date of publication and mention of the grant of the patent: **11.05.1994**
(21) Application number: 90901876.4
(22) Date of filing: 18.01.1990
(51) Int. Cl.: A21D 2/18

(54) **COMPOSITION OF A DIETETIC FOOD IN THE FORM OF BISCUITS WITH HIGH CONTENTS IN ALIMENTARY FIBER AND REDUCED CONTENTS IN CALORIES, AND METHOD FOR PRODUCING THE SAME**
ZUSAMMENSETZUNG EINES DIÄTNAHRUNGSMITTELS IN FORM VON PLÄTZCHEN MIT HOHEM GEHALT AN NAHRUNGSFASERN UND NIEDRIGEM GEHALT AN KALORIEN UND VERFAHREN ZU IHRER HERSTELLUNG
COMPOSITION D'UN ALIMENT DIETETIQUE SOUS FORME DE BISCUIT A HAUTE TENEUR EN FIBRES ALIMENTAIRES ET TENEUR REDUITE EN CALORIES; PROCEDE DE PRODUCTION CORRESPONDANT

(30) Priority: 19.01.1989 IT 4754989
(43) Date of publication of application: 06.11.1991
(73) Proprietor: DICOFARM S.P.A., I-00191 Roma (IT)
(72) Inventor: CARAMELLI, Gianfranco, I-00124 Roma (IT)
(74) Representative: Massari, Marcello
(86) International application number: IT9000009
(87) International publication number: WO9007880

(56) References cited:
- US-A- 4 379 173

## Description

This invention concerns a dietetic aliment in form of biscuits with high contents in natural fibers and low contents in calories.

The invention concerns also the methods for producing this aliment.

The aliments eaten by the largest part of the populations of the most developed countries are very lacking in fibers because of the procedures of refinement to which many of the base products of the nourishment are subjected.

Among these procedures, there are: flour's sifting, rice and other cereals and similar's hulling.

This lack in fiber brings two very serious inconveniences:
- a growing laziness of the intestine;
- the difficulty in reaching the sensation of satiety with a consequent lasting of the pangs of hunger even after eating a sufficient quantity of food from the point of view of the caloric contribution, with a consequent overalimentation.

These inconveniences -by themselves- and even more so if associated, are the main responsibles of the eccess of weight, until obesity that afflicts a high percentage of people belonging to the above mentioned populations.

As it seems impossible either to re-educate the consumers to eat rough products, or, in consequence, to induce the alimentary industries not to produce refined foods, modern dietetics, at present, aims at studying compositions of products containing natural fibers, and prescribing them as meals' fiber integrators, especially in people with an altered lipidic or glycidic metabolism.

One of the main, if not the most important supplier of natural fibers in a concentrated shape is glucomannan, that is the fundamental ingredient of such fiber integrators.

Glucomannan is drawn from Amorphofallus Konjac, a tuber of Far East origin.

It has the peculiarity of increasing its volume when soaked with water, until 100 times its initial volume.

Therefore glucomannan is very satisfying from the point of view of provoking the desired sense of satiety.

However, glucomannan, because of its tendency to loose its peculiarities of swelling when subjected to manipulations and cooking doesn't fit for making finished goods and all the attempts made up to now to produce glucomannan goods easily eatable and provided with alluring peculiarities of taste and flavour have failed.

US-A-4 379 173 discloses that the flow has to be subjected to a resting step prior to being combined with the glucomannan powder to obtain acceptable biscuits
Therefore up to now glucomannan has been given almost exclusively in capsules and its confection of medicinal type doesn't attract the consumers to use it.

Applicant, on the contrary, has tested and got ready a particular composition of ingredients including glucomannan, that, when subjected to a procedure involving a precise succession of operations, allows the production of biscuits which fully satisfy the need to supply glucomannan's fiber in an alluring and tasteful pleasant shape.

Applicant has found that some compositions containing the ingredients quoted in the following examples in the indicated range of proportions, are suitable, when appropriately prepared and baked, to form biscuits with a good flavour and a very good taste.

The general composition in weight is as follows:

| | |
|---|---|
| Wheat meal | 40-60% |
| Sugar | 10-16% |
| Refined vegetable oil | 10-16% |
| Glucomannan | 5-25% |
| Maize meal | 5-10% |
| Honey | 0,1- 2% |
| Ammonium bicarbonate | 1% |
| Refined salt | 0,2- 1% |
| Sodium bicarbonate | 0,2-0,5% |
| Flavours | 0,3-0,6% |

and, besides, water in the proportion of 11 kgs per 100 kgs, of the above.

In particular, applicant has found out, after a number of tests, that in order to obtain the best results in a diet, the two following compositions, respectively for biscuits with 10% and 20% of glucomannan, have proved to be excellent to the task:

| Normal biscuit (10%): | |
|---|---|
| Wheat meal | 52% |
| Sugar | 13,5% |
| Refined vegetable oil | 13,2% |
| Glucomannan | 10,0% |
| Maize meal | 7,8% |
| Honey | 1,4% |
| Ammonium bicarbonate | 1,07% |
| Refined salt | 0,25% |
| Sodium bicarbonate | 0,21% |
| Flavour | 0,3% |

| Strong biscuit (20%): | |
|---|---|
| Wheat meal | 44,0% |
| Sugar | 13,5% |
| Refined vegetable oil | 13,2% |
| Glucomannan | 20,0% |
| Maize meal | 5,8% |
| Honey | 1,4% |
| Ammonium bicarbonate | 1,07% |
| Refined salt | 0,25% |
| Sodium bicarbonate | 0,21% |
| Flavour | 0,3% |

In particular in the product tested by the applicant the quality of Glucomannan used is known like highly refined and with high molecular weight and viscosity, that has proved to be the best for the aims of the invention.

In connection with both the normal type and strong type of biscuit, a method has been devised that, unique, allows the production of the biscuits.

This method includes the following steps:
a) intimate blending apart glucomannan and vegetable oil;
b) kneading together the other ingredients;
c) amalgamating the blend of glucomannan and vegetable oil in the previous mixture;
d) compressing the final knead in the normal shapes led by rolls used to mould the biscuits;
e) depositing the obtained shapes on a conveyor belt that passes through various cooking rooms with increasing temperatures from 130°C to 180°C.

## Claims

1. A composition of a dietetic food in the form of biscuits with high contents in alimentary fiber and reduced caloric contents including:
| | |
|---|---|
| Wheat meal | 40-60% |
| Sugar | 10-16% |
| Refined vegetable oil | 10-16% |
| Glucomannan | 5-25% |
| Maize meal | 5-10% |
| Honey | 0,1- 2% |
| Ammonium bicarbonate | 1% |
| Refined salt | 0,2- 1% |
| Sodium bicarbonate | 0,2-0,5% |
| Flavours | 0,3-0,6% |
and, besides, water in the proportion of 11 kgs per 100 kgs.

2. The composition of a dietetic food in the shape of biscuits, (normal type) including:
| | |
|---|---|
| Wheat meal | 52% |
| Sugar | 13,5% |
| Refined vegetable oil | 13,5% |
| Glucomannan | 10,0% |
| Maize meal | 7,8% |
| Honey | 1,4% |
| Ammonium bicarbonate | 1,07% |
| Refined salt | 0,25% |
| Sodium bicarbonate | 0,21% |
| Flavour | 0,3% |

3. The composition of a dietetic food in the form of biscuits (strong type) including:
| | |
|---|---|
| Wheat meal | 44,0% |
| Sugar | 13,5% |
| Refined vegetable oil | 13,5% |
| Glucomannan | 20,0% |
| Maize meal | 5,8% |
| Honey | 1,4% |
| Ammonium bicarbonate | 1,07% |
| Refined salt | 0,25% |
| Sodium bicarbonate | 0,21% |
| Flavour | 0,3% |

4. A method for producing a biscuit with high contents in alimentary fibers and reduced caloric contents using the ingredients of the claim 1, comprising the following steps:
a) intimate blending apart glucomannan and vegetable oil; b) kneading together the other ingredients; c) amalgamating in the previous mixture the blend of glucomannan and vegetable oil; d) compressing the final knead in the normal shapes led by rolls, used to mould the biscuits; e) depositing the obtained shapes on a conveyor belt that passes through various cooking rooms with increasing temperatures from 130°C to 180°C.

## Patentansprüche

1. Eine Zusammensetzung eines diätetischen Nahrungsmittels in Bisquitform mit hohem Gehalt an Ernährungsfaserstoffen und reduziertem Kaloriengehalt,
bestehend aus:
| | |
|---|---|
| Weizenmehl | 40,00 - 60,00 % |
| Zucker | 10,00 - 16,00 % |
| raffiniertem Pflanzenöl | 10,00 - 16,00 % |
| Glukomannan | 5,00 - 25,00 % |
| Maismehl | 5,00 - 10,00 % |
| Honig | 0,10 - 2,00 % |
| Ammoniumbicarbonat | 1,00 % |
| raffiniertem Salz | 0,20 - 1,00 % |
| Natriumbicarbonat | 0,20 - 0,50 % |
| Geschmacksstoffe | 0,30 - 0,60 % |
und außerdem Wasser im Verhältnis von 11 kg pro 100 kg.

2. Die Zusammensetzung eines diätetischen Nahrungsmittels in Bisquitform (Normaltyp),
bestehend aus:
| | |
|---|---|
| Weizenmehl | 52,00 % |
| Zucker | 13,50 % |
| raffiniertes Pflanzenöl | 13,50 % |
| Glukomannan | 10,00 % |
| Maismehl | 7,80 % |
| Honig | 1,40 % |
| Ammoniumbicarbonat | 1,07 % |
| raffiniertem Salz | 0,25 % |
| Natriumbicarbonat | 0,21 % |
| Geschmacksstoffe | 0,30 % |

3. Die Zusammensetzung eines diätetischen Nahrungsmittels in Bisquitform (starker Typ),
bestehend aus:
| | |
|---|---|
| Weizenmehl | 44,00 % |
| Zucker | 13,50 % |
| raffiniertem Pflanzenöl | 13,50 % |
| Glukomannan | 20,00 % |
| Maismehl | 5,80 % |
| Honig | 1,40 % |
| Ammoniumbicarbonat | 1,07 % |
| raffiniertem Salz | 0,25 % |
| Natriumbicarbonat | 0,21 % |
| Geschmacksstoffe | 0,30 % |

4. Ein Verfahren zur Herstellung eines Bisquits mit hohem Gehalt an Ernährungsfasern und reduziertem Kaloriengehalt unter Verwendung der Inhaltsstoffe gemäß Anspruch 1 und mit folgenden Schritten:
a) innige Vermischung des Glukomannans und des Pflanzenöles;
b) Zusammenkneten der anderen Inhaltsstoffe;
c) Einamalganieren des Verschnittes aus Glukomannan und Pflanzenöl in die vorherige Mischung;
d) Verpressen der fertigen Knetmasse in die üblichen, von Rollen geführten Formen zur Ausformung der Bisquits;
e) Ablegen der erhaltenen Formen auf ein Förderband, das unterschiedlich von 130° bis 180° C steigend temperierte Backräume passiert.

## Revendications

1. Une composition d'un aliment diététique sous la forme de biscuits qui présentent une teneur élevée en fibres alimentaires et une teneur réduite en calories, incluant :
| | |
|---|---|
| - farine de blé | 40-60% |
| - sucre | 10-16% |
| - huile végétale raffinée | 10-16% |
| - glucomannan | 5-25% |
| - farine de maïs | 5-10% |
| - miel | 0,1-2% |
| - bicarbonate d'ammonium | 1% |
| - sel raffiné | 0,2-1% |
| - bicarbonate de sodium | 0,2-0,5% |
| - arômes | 0,3-0,6% |
et, outre ces composés, la composition contient de l'eau à raison de 11 kg pour 100 kg.

2. La composition d'un aliment diététique sous la forme de biscuits (type normal) incluant :
| | |
|---|---|
| - farine de blé | 52% |
| - sucre | 13,5% |
| - huile végétale raffinée | 13,5% |
| - glucomannan | 10,0% |
| - farine de maïs | 7,8% |
| - miel | 1,4% |
| - bicarbonate d'ammonium | 1,07% |
| - sel raffiné | 0,25% |
| - bicarbonate de sodium | 0,21% |
| - arôme | 0,3% |

3. La composition d'un aliment diététique sous la forme de biscuits (type fort) incluant :
| | |
|---|---|
| - farine de blé | 44% |
| - sucre | 13,5% |
| - huile végétale raffinée | 13,5% |
| - glucomannan | 20,0% |
| - farine de maïs | 5,8% |
| - miel | 1,4% |
| - bicarbonate d'ammonium | 1,07% |
| - sel raffiné | 0,25% |
| - bicarbonate de sodium | 0,21% |
| - arôme | 0,3% |

4. Un procédé de préparation d'un biscuit présentant une teneur élevée en fibres alimentaires et une teneur réduite en calories, à partir des composants décrits dans la revendication 1, qui comprend les étapes suivantes :
a) mélange intime à part du glucomannan et de l'huile végétale;
b) malaxage des autres ingrédients ensemble;
c) enmalgamation dans le mélange précédent du mélange constitué du glucomannan et de l'huile végétale;
d) compression du mélange final sous des formes normales par des rouleaux qui sont utilisés pour façonner les biscuits;
e) dépôts des formes obtenues sur la courroie d'un convoyeur qui passe à travers différentes unités de chauffage avec augmentation des températures de 130°C à 180°C.
